# EUROPEAN PATENT APPLICATION

(11) **EP 3 146 852 A1**
(43) Date of publication of application: **29.03.2017**
(21) Application number: 15792370.7
(22) Date of filing: 08.05.2015
(51) Int. Cl.: A23C 20/00, A23C 20/02, B65D 77/20, B65D 85/30

(54) **TOFU, TOOL FOR SHAPING TOFU AND METHOD FOR SHAPING TOFU**

(30) Priority: 14.05.2014 JP 2014100152
(71) Applicant: Yoshida, Takako, Toyonaka-shi, Osaka 560-0082 (JP)
(72) Inventor: Yoshida, Takako, Toyonaka-shi, Osaka 560-0082 (JP)
(74) Representative: Takeuchi, Maya
(86) International application number: PCT/JP2015/063321
(87) International publication number: WO 2015/174342

(57) **Abstract**

Provided is a tofu that enables an eater to enjoy eating by entertaining the eater in an aspect (sight) other than flavor (taste). Tofu (1) includes incisions (2a-2d) linearly formed on a top surface (1a) of the tofu (1). The incisions (2a-2d) have a depth (h) that does not reach a bottom surface (1b) of the tofu (1), and a depth (h) direction of the incisions (2a-2d) is substantially perpendicular to the top surface (1a). When a colored liquid seasoning (3) has been poured on the tofu (1), the incisions (2a-2d) are recognizable as the colored liquid seasoning (3) penetrates and pools in the incisions (2a-2d).

## Description

### Technical Field

The present invention relates to a tofu as a food, and to a tofu shaping tool and a tofu shaping method that are used in shaping the tofu.

### Background Art

Tofu is rich in content of, for example, good-quality protein and lipids, has a high nutritional value, and provides a sense of fullness due to a high water content. Tofu is also a low-calorie food. For these reasons, tofu is popular as a food for health and beauty, and eaten not only in Japan but also around the world.

Tofu is used as an ingredient for miso soup and other dishes. Tofu is also eaten as, for example, hiyayakko (chilled tofu) and yudofu (tofu simmered in hot water) with soy sauce and the like directly poured on top. Taking advantage of such ways of eating tofu, Patent Literature 1 discloses a tofu having a recess portion that is formed on a front surface of the tofu to allow soy sauce to pool therein. Soy sauce pooling in the recess portion of this tofu gives a more realistic appearance to the shape of a flower, a character, an animal, a plant, etc.

### Citation List

### Patent Literature

Patent Literature 1: JP 2014-18197A

### Summary of Invention

### Technical Problem

As the recess portion formed on the front surface of the tofu disclosed in Patent Literature 1 is wide, the shape (of a flower, a character, an animal, a plant, etc.) formed by the recess portion after pouring soy sauce is sufficiently predictable before pouring soy sauce. Therefore, this tofu does not exhibit a large contrast between before and after pouring soy sauce, and an eater does not feel particularly surprised by it.

In light of the foregoing issue, the present invention is directed to a tofu that enables an eater to enjoy eating by entertaining the eater in an aspect other than flavor, and a tofu shaping tool and a tofu shaping method for shaping the tofu.

### Solution to Problem

One embodiment of the present invention is directed to a tofu having an incision linearly formed on a top surface thereof, the incision having a depth that does not reach a bottom surface of the tofu, a depth direction of the incision being substantially perpendicular to the top surface of the tofu. When a colored liquid seasoning has been poured on the tofu, the incision is recognizable as the colored liquid seasoning penetrates and pools in the incision.

When this tofu is served to an eater, the eater is not particularly surprised simply by looking at the tofu because the incision is hard to recognize. However, upon pouring the colored liquid seasoning on the tofu to eat the tofu, the colored liquid seasoning penetrates and pools in the incision, thereby coloring the incision. As such, pouring the colored liquid seasoning emphasizes the appearance of the incision. Therefore, upon pouring the liquid seasoning on the tofu, the eater recognizes the incision, hence the shape formed by the incision. The shape of the incision is not limited to a particular shape, and may exhibit a plant, an animal, scenery, etc. Furthermore, the shape of the incision may exhibit a mark and letters indicating a producer and a distributor of the tofu, letters indicating a message for the eater, etc. For example, the tofu may be utilized as an advertising space by presenting an advertisement with use of the incision, similarly to a poster and a flyer of a commercial product and a company.

With this tofu, what is hard to recognize before pouring the liquid seasoning changes into a clearly recognizable state upon pouring the liquid seasoning. This unconventional presentation can surprise and entertain the eater. Such a change does not occur when the tofu is served, but occurs when the eater pours the liquid seasoning to eat the tofu, that is, when the eater is watching a front surface of the tofu. As the eater watches the process in which the incision is emphasized, such a change can surprise and entertain the eater, and also leave a strong impression on the eater. Furthermore, as soon as a part of the incision is emphasized upon starting to pour the liquid seasoning, the eater builds up an expectation as to what kind of shape will be emphasized while aiming at the remaining part of the incision in pouring the liquid seasoning. The eater can thus enjoy the act of pouring the liquid seasoning as well.

In the foregoing tofu, the incision is formed in a direction that is substantially perpendicular to the top surface. Accordingly, the liquid seasoning pools more intensively in the incision, and the incision is more emphasized when visually observed.

Another embodiment of the present invention is directed to a tofu shaping tool for shaping the foregoing tofu, the tofu shaping tool including a base and a plate-like projection that is used in forming the incision and is mounted on a main surface of the base such that the plate-like projection is substantially perpendicular to the main surface of the base.

This tofu shaping tool easily enables shaping of the tofu having the incision that is emphasized in appearance by the colored liquid seasoning poured thereon.

This tofu shaping tool may further include a sidewall portion connected to the base.

In this tofu shaping tool, the base and the plate-like projection may be integrated.

In this tofu shaping tool, the base, the plate-like projection and the sidewall portion may be integrated.

The foregoing structures increase the strength of the tofu shaping tool and give the plate-like projection resistance to breakage, thereby improving the durability of the tofu shaping tool.

Still another embodiment of the present invention is directed to a method for shaping the foregoing tofu, the method including: preparing a tofu shaping tool including a base, a sidewall portion connected to the base, and a plate-like projection that is used in forming the incision and is mounted on a main surface of the base such that the plate-like projection is substantially perpendicular to the main surface of the base; filling the tofu shaping tool with raw ingredients for producing the tofu; coagulating the raw ingredients; and removing the tofu shaping tool after the coagulation.

Still another embodiment of the present invention is directed to a method for shaping the foregoing tofu, the method including: preparing a tofu shaping tool including a base and a plate-like projection that is used in forming the incision and is mounted on a main surface of the base such that the plate-like projection is substantially perpendicular to the main surface of the base; and pressing the tofu shaping tool onto a front surface of the tofu.

Still another embodiment of the present invention is directed to a method for shaping the foregoing tofu, the method including: preparing a tofu shaping tool including a base, a sidewall portion connected to the base, and a plate-like projection that is used in forming the incision and is mounted on a main surface of the base such that the plate-like projection is substantially perpendicular to the main surface of the base; and pressing the tofu shaping tool onto a front surface of the tofu.

The foregoing tofu shaping methods easily enable shaping of the tofu having the incision that is emphasized in appearance by the colored liquid seasoning poured thereon.

### Advantageous Effects of Invention

The present invention can provide a tofu that enables an eater to enjoy eating by entertaining the eater in an aspect (sight) other than flavor (taste), and a tofu shaping tool and a tofu shaping method for shaping the tofu.

### Brief Description of Drawings

FIG. 1 is a perspective view showing a structure of a tofu according to one embodiment of the present invention.
FIG. 2 is a perspective view showing a state where soy sauce has been poured on the tofu shown in FIG. 1.
FIG. 3 is a cross-sectional view of the tofu shown in FIG. 2, taken along the line X-X.
FIG. 4 is a perspective view showing a structure of a tofu shaping tool according to one embodiment of the present invention.
FIG. 5 illustrates a tofu shaping method according to one embodiment of the present invention.
FIG. 6 is a perspective view showing a structure of a tofu according to one conventional example.
FIG. 7 is a cross-sectional view of the tofu shown in FIG. 6, taken along the line Y-Y.

### Description of Embodiments

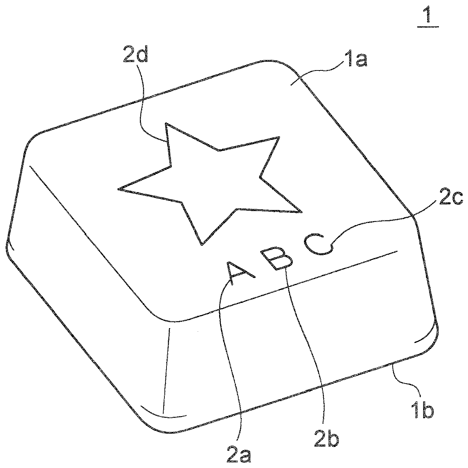

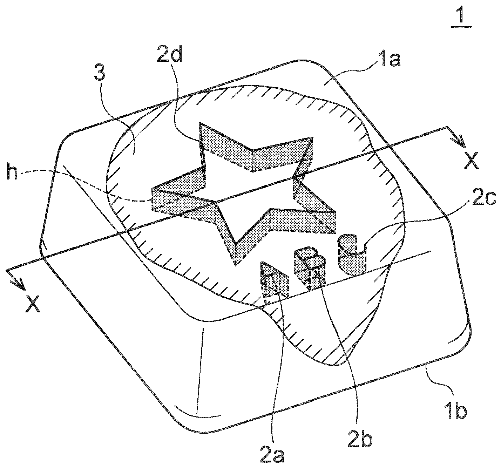

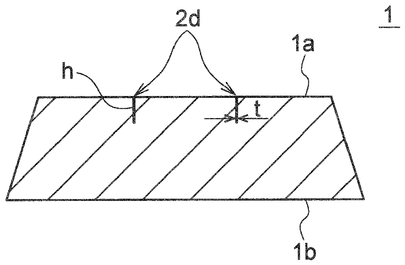

The following describes an example of a tofu according to one embodiment of the present invention with reference to the drawings. FIG. 1 is a perspective view showing a structure of a tofu 1 according to one embodiment of the present invention. FIG. 2 is a perspective view showing a state where soy sauce 3 (an example of a colored liquid seasoning) has been poured on the tofu 1 shown in FIG. 1. FIG. 3 is a cross-sectional view of the tofu shown in FIG. 2, taken along the line X-X.

As shown in FIG. 1, the tofu 1 according to the present embodiment has linear incisions 2a to 2d formed on its top surface (front surface) 1a. The incisions 2a to 2d are formed such that they have a predetermined depth in a direction that is substantially perpendicular to the top surface 1a of the tofu 1 (substantially 90° with respect to the top surface 1a). The incisions 2a, 2b and 2c respectively form capital alphabetical letters A, B and C. The incision 2d forms a star-shaped mark. The incisions 2a to 2d are formed such that they are hard to be recognized by an eater before pouring the soy sauce 3. As shown in FIG. 2, once the soy sauce 3 has been poured, the soy sauce 3 penetrates and pools in the incisions 2a to 2d. As a result, the letters A, B and C formed by the incisions 2a to 2c and the star-shaped mark formed by the incision 2d are recognized more clearly.

A depth h of the incisions 2a to 2d (see FIGs. 2 and 3) is not limited to a particular depth as long as it does not reach a bottom surface (back surface) 1b of the tofu 1. It is sufficient for the depth h to make the eater recognize the incisions 2a to 2d when the colored liquid seasoning, such as the soy sauce 3, has penetrated the incisions 2a to 2d. Should the depth of the incisions reach the bottom surface of the tofu, the incisions become equivalent to cut lines along which the tofu is cut into several pieces. In this case, the penetrating colored liquid seasoning, such as soy sauce, drains from the bottom surface without staying on the cut lines, and hence the eater cannot recognize the incisions.

Although the depth h of the incisions 2a to 2d is not limited to a particular depth as mentioned earlier, the depth h is preferably equal to or smaller than 30 mm, particularly preferably equal to or smaller than 10 mm, and most preferably equal to or smaller than 5 mm. An optimal value of the depth of the incisions 2a to 2d is selected as appropriate in accordance with, for example, the size and raw ingredients (e.g., soy milk, which is juice made by squeezing soy beans) of the tofu 1, and the types and combination of colored liquid seasonings (e.g., soy sauce). Furthermore, the incisions need not have the same depth, and different incisions 2a to 2d can have different depths.

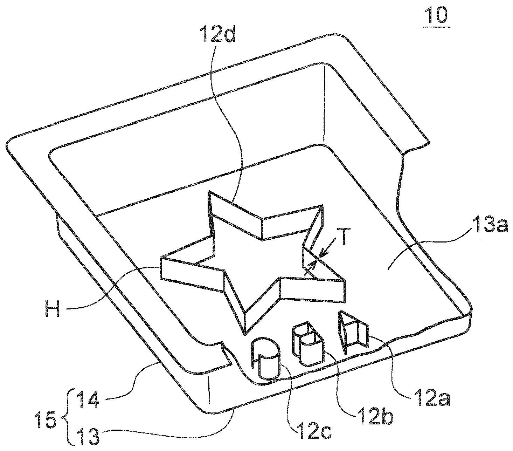

As will be described later, when a tofu shaping tool 10 shown in FIG. 4 is used in shaping the tofu 1, a height H of projections 12a to 12d (see FIG. 4) is substantially equal to the depth h of the incisions 2a to 2d (see FIGs. 2 and 3) formed on the top surface 1a of the tofu 1.

The linear incisions 2a to 2d formed on the top surface 1a of the tofu 1 may have any width (thickness) t (see FIG. 3) as long as they are linear. It is sufficient for the width t to form a gap to be penetrated by the colored liquid seasoning, such as the soy sauce 3. The smaller the width t, the more preferable. Should the incisions be large in width, that is, non-linear, the eater clearly recognizes the incisions before pouring the colored liquid seasoning (e.g., soy sauce). Such incisions cannot exhibit a surprising and unconventional presentation to the eater.

Although the width t of the incisions 2a to 2d are not limited to a particular width as mentioned earlier, the width t is preferably equal to or smaller than 1 mm, particularly preferably equal to or smaller than 0.8 mm, and most preferably equal to or smaller than 0.5 mm. An optimal value of the width (thickness) of the incisions 2a to 2d is selected as appropriate in accordance with, for example, the size and raw ingredients (e.g., soy milk, which is juice made by squeezing soy beans) of the tofu 1, and the types and combination of colored liquid seasonings (e.g., soy sauce).

As will be described later, when the tofu shaping tool 10 shown in FIG. 4 is used in shaping the tofu 1, a thickness T of the projections 12a to 12d (see FIG. 4) is substantially equal to the width (thickness) t of the linear incisions 2a to 2d (see FIG. 3) formed on the top surface 1a of the tofu 1. However, referring to FIG. 3, the width (thickness) t of the incision 2d is smaller than the thickness T of the projections 12a to 12d in reality, because the width (thickness) t of the incision 2d is pressed from the outside (opposite sides in FIG. 3) toward the inside (a central portion in FIG. 3) of the tofu 1 due to, for example, an elastic force of the tofu 1. Although FIG. 3 shows only the width (thickness) t of the incision 2d, the same goes for the width (thickness) t of other incisions 2a to 2c.

In the present embodiment, the incisions 2a, 2b and 2c respectively form the alphabetical letters "A," "B" and "C" on the top surface 1a of the tofu 1. The incision 2d forms the "star-shaped" mark on the top surface 1a of the tofu 1.

When the eater eats the tofu 1 as hiyayakko (chilled tofu), the eater pours the colored liquid seasoning, such as the soy sauce 3, directly on the tofu 1. Then, the soy sauce 3 penetrates and pools in the incisions 2a to 2d having the minute width t, thereby giving the incisions 2a to 2d a blackish color of the soy sauce 3 (see FIG. 2). The tofu 1 is normally white or whitish in color because it is produced by coagulating soy milk, which is juice made by squeezing soy beans, in a molding box. This makes the blackish color more vivid.

In this case, the soy sauce 3 is applied also to regions other than the incisions 2a to 2d. However, in the regions other than the incisions 2a to 2d, the soy sauce 3 does not pool, but lightly coats the tofu 1. As the tofu 1 is white or whitish in color, the regions other than the incisions 2a to 2d also become tinged with the soy sauce 3 to some extent. However, as the soy sauce 3 does not pool in these regions, these regions are much lighter in color than the incisions 2a to 2d. As such, pouring the soy sauce 3 on the tofu 1 emphasizes the appearance of the incisions 2a to 2d.

Specifically, as shown in FIG. 2, the alphabetical letters "A," "B" and "C" are respectively formed by the incisions 2a, 2b and 2c on the top surface 1a of the tofu 1 so as to be visually observed by the eater. Similarly, the "star-shaped" mark is formed by the incision 2d on the top surface 1a of the tofu 1 so as to be visually observed by the eater. In the regions other than the incisions 2a to 2d, the soy sauce 3 is thinly spread. Therefore, the appearance of the incisions 2a to 2d is emphasized. This enables the eater to clearly recognize the letters "A," "B" and "C" and the "star-shaped" mark.

As described above, the incisions 2a to 2d, which are hard to recognize before pouring the soy sauce 3 on the tofu 1, become clearly recognizable upon pouring the soy sauce 3. Thus, the tofu 1 exhibits a contrast between before and after pouring the soy sauce 3 on the tofu 1, which comes as a surprise to the eater. Such an unconventional presentation enables the eater to enjoy eating. When pouring the soy sauce 3 on the tofu 1, the eater is looking at the tofu 1. That is, the eater can visually observe the moment when the incisions 2a to 2d change into a clearly recognizable state. Such a change can not only surprise and entertain the eater, but also leave a strong impression on the eater. Furthermore, upon starting to pour the soy sauce 3 on the tofu 1, the eater notices the change in the tofu 1 as soon as a part the incisions 2a to 2d is emphasized. With an expectation of the occurrence of the change, the eater can enjoy the act of aiming at the remaining part of the incisions 2a to 2d in pouring the soy sauce 3. Therefore, the eater can enjoy eating in an aspect (sight) other than flavor (taste).

In the present embodiment, the incisions 2a to 2d respectively have the shapes of "A," "B," "C" and "star" as mentioned earlier. However, the shapes of the incisions 2a to 2d are not limited to these shapes. The shapes of the incisions may exhibit a plant, an animal or scenery (e.g., Mount Fuji) in a graphical form, a pattern, a mark, letters, etc. Furthermore, the shapes of the incisions may exhibit, for example, a mark and letters indicating a producer, a distributor, and the like of the tofu, and letters indicating a message for the eater. Especially, the incisions may present an advertisement similarly to, for example, a poster and a flyer of a commercial product and a company. In this case, the tofu 1 can be utilized as an advertising space.

Next, a description is given of another embodiment directed to a method for shaping the tofu 1 with reference to the drawings.

FIG. 4 is a perspective view (partial cutout view) showing a structure of a tofu shaping tool according to one embodiment of the present invention. The tofu shaping tool 10 includes a base 13 and a sidewall portion 14. The base 13 and the sidewall portion 14 are connected to each other, and compose a container 15 having an opening at the top. The base 13 serves as a bottom portion of the container 15. Plate-like projections 12a to 12d are mounted on a main surface 13a of the base 13 at the inner side of the container 15. The base 13, the sidewall portion 14 and the plate-like projections 12a to 12d are made of the same material (e.g., resin, such as polypropylene (PP)) and integrated to compose the container 15.

The tofu 1 having the incisions 2a to 2d formed on the top surface 1a (see FIG. 1) can be produced by: filling the tofu shaping tool 10 with raw ingredients (e.g., soy milk) for producing the tofu; coagulating the row ingredients; and removing the tofu shaping tool 10 after the coagulation. Note that the tofu is not limited to being produced using a particular method, and can be produced using a method similar to conventional methods.

The tofu 1 having the incisions 2a to 2d can be produced successively in an automated manner in a factory and the like. For example, the tofu 1 having the incisions 2a to 2d can be produced successively by: preparing an array of many tofu shaping tools 10, each including the projections 12a to 12d, along a production line in a factory and the like; successively filling the tofu shaping tools 10 with raw ingredients (e.g., soy milk) for producing the tofu; coagulating the row materials; and removing the tofu shaping tools 10 after the coagulation.

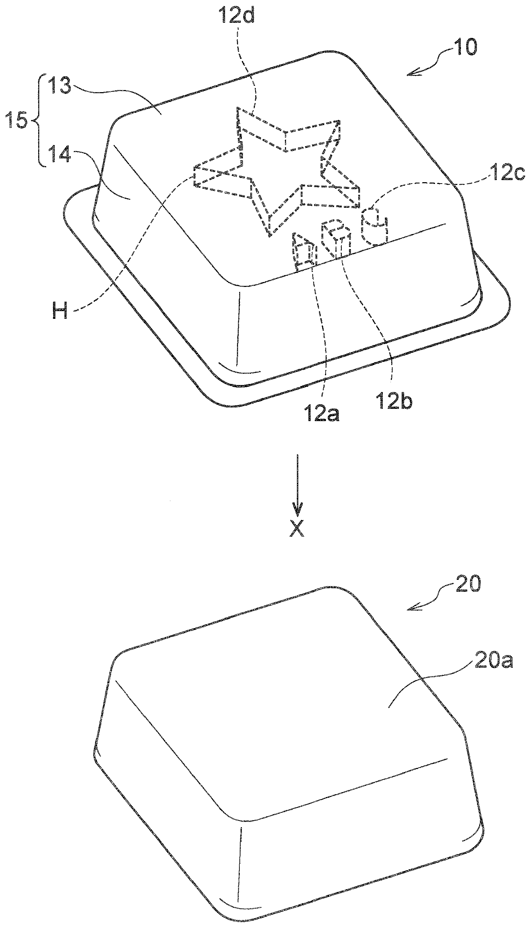

Alternatively, after producing a tofu in advance, the incisions 2a to 2d can be formed on a top surface of the tofu in a post-production process. In this case, as shown in FIG. 5 for example, a tofu 20 that has been produced in advance is prepared, and the tofu shaping tool 10 is arranged to cover the tofu 20 from above and pressed onto a top surface (front surface) 20a of the tofu 20 (in the direction of arrow X). Accordingly, the projections 12a to 12d are pressed such that they are substantially perpendicular to the top surface 20a of the tofu 20, thereby forming the incisions 2a to 2d, respectively (see FIG. 1). Thereafter, the tofu shaping tool 10 is removed from the tofu 1. As a result, the tofu 1 shaped as shown in FIG. 1 can be obtained.

The container 15 is large enough in size to accommodate the tofu 20. The depth h of the incisions 2a to 2d is substantially equal to the height H of the projections 12a to 12d as the projections 12a to 12d are pressed into the tofu 20 until the main surface 13a of the base 13 at the inner side of the container 15 comes into contact with the tofu 20. Furthermore, as mentioned earlier, the thickness T of the projections 12a to 12d is substantially equal to the width (thickness) t of the incisions 2a to 2d formed on the top surface 1a of the tofu 1. Note that the projections need not have the same height, and different projections 12a to 12d can have different heights.

The tofu 1 shaped as shown in FIG. 1 may be obtained by pressing the tofu 20 into the tofu shaping tool 10 in the direction opposite to the direction of arrow X. For example, in a state where the opening of the container 15 is facing up (see FIG. 4), the tofu 20 may be inserted into the tofu shaping tool 10 from above with its top surface 20a facing down, thereby bringing the main surface 13a of the base 13 into contact with the top surface 20a of the tofu 20. The incisions 2a to 2d are consequently formed on the top surface 20a of the tofu 20. That is, the tofu 20 is shaped into the tofu 1.

In the embodiment just described, the base 13, the sidewall portion 14 and the plate-like projections 12a to 12d are made of the same material and integrated to compose the container 15. Alternatively, the plate-like projections 12a to 12d can be made of another material (e.g., stainless steel).

Although the tofu shaping tool 10 has been described to include the sidewall portion 14, it may not include the sidewall portion 14, and may include the plate-like base 13 and the projections 12a to 12d that are mounted on the main surface 13a of the base 13 such that they are substantially perpendicular to the main surface 13a. In this case, the tofu 20 is shaped into the tofu 1 by pressing the projections 12a to 12d into the top surface 20a of the tofu 20 until the main surface 13a of the base 13 comes into contact with the top surface 20a of the tofu 20. In this case also, the depth of the incisions 2a to 2d is substantially equal to the height of the projections 12a to 12d. It is preferable that the base 13 and the plate-like projections 12a to 12d be made of the same material (e.g., resin, such as polypropylene (PP)) and integrated. Alternatively, the plate-like projections 12a to 12d can be made of another material (e.g., stainless steel).

The tofu shaping tool 10 may not include the sidewall portion 14 and the base 13, and may include only the projections 12a to 12d. That is, the projections 12a to 12d may be prepared as discrete projections that are independent of one another (similarly to, for example, cookie and vegetable cutters), and the incisions 2a to 2d may be respectively formed on the top surface 1a of the tofu 1 by pressing the projections 12a to 12d into the top surface 20a of the tofu 20 such that the projections 12a to 12d are substantially perpendicular to the top surface 20a.

As described above, with use of the tofu shaping tool 10, the tofu 20 can easily be shaped into the tofu 1 according to one embodiment.

In the above-described embodiments, the incisions 2a to 2d having the shapes of "A," "B," "C" and "star" are formed across the entire top surface 1a of the tofu 1. Alternatively, for example, the top surface 1a of the tofu 1 can be equally divided into two or four spaces, and the same incisions 2a to 2d can be formed in every space. This enables preparation of the tofu 1 having the incisions 2a to 2d formed thereon in accordance with the number of eaters (two or four). Instead of being provided as a whole bulk (a unit called cho), the tofu 1 may be provided in the form of, for example, small cut pieces of tofu to be used as an ingredient for miso soup and other dishes. In this case, the incisions can be formed on every individual cut piece of tofu.

### Modification Examples

Although some embodiments have been described thus far, the present invention is not limited to these embodiments. For example, the depth of the incisions 2a to 2d may vary depending on the position, instead of being constant. Likewise, the gap (thickness) of the incisions 2a to 2d may vary depending on the position, instead of being constant. In these cases, the degree by which the incisions 2a to 2d are emphasized by the poured soy sauce 3 varies depending on the position, thereby entertaining the eater to a larger extent.

The colored liquid seasoning is not limited to the soy sauce 3, and may be, for example, any one of various types of dressings (e.g., such sauces as ponzu and steak sauce). The liquid seasoning may be viscous to some extent as long as it penetrates the incisions 2a to 2d. For example, a jelly-like seasoning may be used as the liquid seasoning.

Although the incisions 2a to 2d are formed only on the top surface 1a of the tofu 1, they may be formed on a side surface of the tofu 1.

Incisions may be formed on each of the top surface 1a and the bottom surface 1b of the tofu 1. In this case, the incisions formed on the top surface 1a of the tofu 1 may differ from the incisions formed on the bottom surface 1b of the tofu 1. For example, when the top surface 1a and the bottom surface 1b of the tofu 1 have different incisions formed thereon, one of them can be selected in accordance with the eater's mood of that day. This tofu can be produced by, for example: preparing a container composed of a housing and a cover, similarly to a lunch box; forming, on each of the housing and the cover, plate-like projections used in forming incisions; inserting a tofu into the housing; and placing the cover. As a result, the tofu 1 having the incisions formed on each of the top surface 1a and the bottom surface 1b can be produced.

For example, the tofu shaping tool 10 may be used as a package of the tofu 1 when selling the tofu 1. In this case, the tofu shaping tool 10 may be made of resin, such as polypropylene (PP). Inserting the tofu 20 into such a tofu shaping tool 10 forms the tofu 1 having the incisions 2a to 2d. Then, the opening of the tofu shaping tool 10 is sealed using a film made of polyethylene (PE) and the like. The tofu 1 may be sold as-is in this state. With this method, after shaping the tofu 20 into the tofu 1 using the tofu shaping tool 10, the tofu 1 need not be newly packed. Therefore, the number of processes for producing the tofu 1 can be reduced, and the production of the tofu 1 is facilitated.

In the present invention, various types of additives for cosmetic and appetite improvements can be added to raw ingredients of the tofu. Examples of such additives include collagen, hyaluronic acid, placenta and fragrance (e.g., a rose-scented extract). The type of the tofu is not limited to cotton tofu, soft cotton tofu, silken tofu, and tofu that is heated and coagulated after packing, and may be egg tofu, sesame tofu, annin (almond) tofu, milk tofu, yuzu tofu, jimami (peanut) tofu, etc. The tofu is not limited to being white or whitish in color, and may be, for example, pink, red, orange or green in color. The tofu is not limited to having a quadrilateral shape, and may have, for example, a round shape, a spherical shape, a heart shape, and a shape of a character.

### Conventional Example

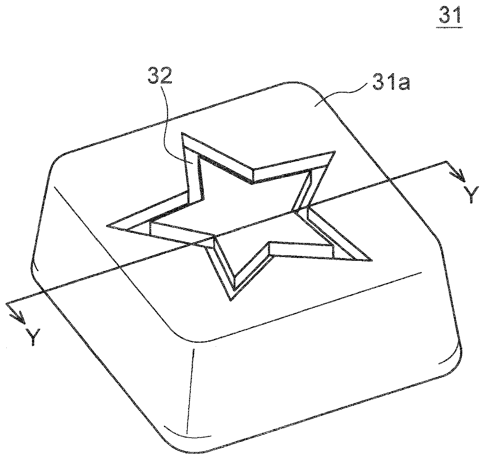

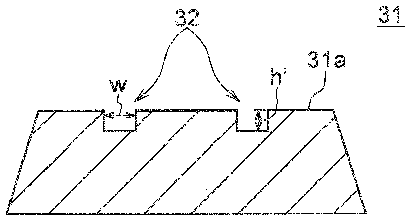

FIG. 6 is a perspective view showing a structure of a tofu according to one conventional example. FIG. 7 is a cross-sectional view of the tofu shown in FIG. 6, taken along the line Y-Y.

A recess-like groove 32 is formed on a top surface 31a of a tofu 31 according to the conventional example. In FIG. 7, the width and height of the groove 32 are respectively indicated as W and h'.

The tofu 31 according to the conventional example is structured such that, once an eater has poured soy sauce into the recess-like groove 32, the soy sauce spreads uniformly inside the groove 32 and makes a star-shaped mark formed by the recess-like groove 32 more vivid. In view of this, the groove 32 needs to have a capacity for sufficiently holding soy sauce enough to eat the tofu 31.

A description is now given of a comparison between the linear incisions 2a to 2d according to the above-described embodiments (see FIGs. 2 and 3) and the recess-like groove 32 according to the conventional example (see FIGs. 6 and 7). As the incisions 2a to 2d are linear, their width (thickness) t is extremely small. On the other hand, the recess-like groove 32 has a fairly large width W (normally equal to or larger than 10 mm) to allow soy sauce to pool therein sufficiently.

In order to form the groove 32 with a relatively large capacity in the tofu 31 according to the conventional example, the top surface 31a of the tofu 31 needs to be scraped. Accordingly, the volume (cubic content) of the tofu 31 itself is reduced by the amount of scraping.

On the other hand, according to the above-described embodiments, the linear incisions 2a to 2d are merely lightly formed on the top surface 1a of the tofu 1. As the recess-like groove need not be formed in the tofu 1, the volume (cubit content) of the tofu 1 itself is hardly reduced.

For example, the star-shaped groove 32 is formed on the top surface 31a of the tofu 31 according to the conventional example by: preparing a tofu mold corresponding to the star-shaped groove 32 shown in FIG. 6; filling the tofu mold with raw ingredients (e.g., soy milk) for producing the tofu; coagulating the raw ingredients; and removing the tofu mold after the coagulation.

Therefore, after producing a tofu in advance, the star-shaped groove cannot be formed on a top surface of the tofu in a post-production process. Furthermore, the recess-like groove cannot be formed simply by pressing a tofu mold onto a top surface of a shaped tofu.

The tofu 31 according to the conventional example is structured such that, once an eater has poured soy sauce, the soy sauce spreads uniformly inside the groove 32 and makes the star-shaped mark more vivid. However, even before the eater pours the soy sauce on the tofu 31, the star-shaped groove 32 formed on the top surface 31a of the tofu 31 is clearly recognizable. As the tofu 31 does not exhibit a surprising and unconventional presentation attributed to a contrast between before and after pouring the soy sauce on the tofu 31, the eater cannot be entertained in an aspect (sight) other than flavor (taste), that is, the eater cannot enjoy eating.

Although the above-described embodiments have been presented as specific embodiments of the present invention, the above-described embodiments merely serve as examples, and are not to be construed as restrictive. A variety of modifications apparent to a person skilled in the art can be resorted to as falling within the scope of the present invention.

### Industrial Applicability

The present invention is useful for a tofu as a food, and for a tofu shaping tool and a tofu shaping method that are used in shaping the tofu. Especially, the tofu can be utilized as an advertising space by presenting an advertisement with use of incisions, similarly to, for example, a poster and a flyer of a commercial product and a company.

### Reference Signs List

- 1: tofu
- 1a: top surface
- 1b: bottom surface
- 2a to 2d: incision
- 3: soy sauce (colored liquid seasoning)
- 10: tofu shaping tool
- 12a to 12d: projection
- 13: base
- 14: sidewall portion
- 15: container
- 20: tofu before shaping

## Claims

1. A tofu,
**characterized in that**
the tofu comprises an incision linearly formed on a top surface of the tofu, the incision having a depth that does not reach a bottom surface of the tofu, a depth direction of the incision being substantially perpendicular to the top surface of the tofu, and
when a colored liquid seasoning has been poured on the tofu, the incision is recognizable as the colored liquid seasoning penetrates and pools in the incision.

2. A tofu,
**characterized in that**
the tofu comprises an incision linearly formed on a top surface of the tofu, the incision having a depth that does not reach a bottom surface of the tofu, a depth direction of the incision being substantially perpendicular to the top surface of the tofu, and
the incision forms a shape of at least one selected from the group consisting of a letter, a mark, a plant, an animal and scenery.

3. A tofu shaping tool for shaping the tofu of claim 1 or 2,
**characterized in that** the tofu shaping tool comprises:
a base; and
a plate-like projection used in forming the incision and mounted on a main surface of the base such that the plate-like projection is substantially perpendicular to the main surface of the base.

4. The tofu shaping tool according to claim 3,
**characterized in that** the tofu shaping tool further comprises:
a sidewall portion connected to the base.

5. The tofu shaping tool according to claim 3,
**characterized in that** the base and the plate-like projection are integrated.

6. The tofu shaping tool according to claim 4,
**characterized in that** the base, the plate-like projection and the sidewall portion are integrated.

7. A method for shaping the tofu of claim 1 or 2,
**characterized in that** the method comprises:
preparing a tofu shaping tool including a base, a sidewall portion connected to the base, and a plate-like projection that is used in forming the incision and is mounted on a main surface of the base such that the plate-like projection is substantially perpendicular to the main surface of the base;
filling the tofu shaping tool with raw ingredients for producing the tofu;
coagulating the raw ingredients; and
removing the tofu shaping tool after the coagulation.

8. A method for shaping the tofu of claim 1 or 2,
**characterized in that** the method comprises:
preparing a tofu shaping tool including a base and a plate-like projection that is used in forming the incision and is mounted on a main surface of the base such that the plate-like projection is substantially perpendicular to the main surface of the base; and
pressing the tofu shaping tool onto a front surface of the tofu.

9. A method for shaping the tofu of claim 1 or 2,
**characterized in that** the method comprises:
preparing a tofu shaping tool including a base, a sidewall portion connected to the base, and a plate-like projection that is used in forming the incision and is mounted on a main surface of the base such that the plate-like projection is substantially perpendicular to the main surface of the base; and
pressing the tofu shaping tool onto a front surface of the tofu.

## Amended claims

### Amended claims under Art. 19.1 PCT

**1.** A tofu,
**characterized in that**
the tofu comprises an incision linearly formed on a top surface of the tofu, the incision having a depth that does not reach a bottom surface of the tofu, a depth direction of the incision being substantially perpendicular to the top surface of the tofu, and
when a colored liquid seasoning has been poured on the tofu, the incision is recognizable as the colored liquid seasoning penetrates and pools in the incision.

**2.** A tofu,
**characterized in that**
the tofu comprises an incision linearly formed on a top surface of the tofu, the incision having a depth that does not reach a bottom surface of the tofu, a depth direction of the incision being substantially perpendicular to the top surface of the tofu, and
the incision forms a shape of at least one selected from the group consisting of a letter, a mark, a plant, an animal and scenery.

**3.** A tofu shaping tool for shaping the tofu of claim 1 or 2,
**characterized in that** the tofu shaping tool comprises:
a base; and
a plate-like projection used in forming the incision and mounted on a main surface of the base such that the plate-like projection is substantially perpendicular to the main surface of the base, and
a height of the plate-like projection is substantially equal to the depth of the incision.

**4.** The tofu shaping tool according to claim 3,
**characterized in that** the tofu shaping tool further comprises:
a sidewall portion connected to the base.

**5.** The tofu shaping tool according to claim 3,
**characterized in that** the base and the plate-like projection are integrated.

**6.** The tofu shaping tool according to claim 4,
**characterized in that** the base, the plate-like projection and the sidewall portion are integrated.

**7.** A method for shaping the tofu of claim 1 or 2,
**characterized in that** the method comprises:
preparing a tofu shaping tool including a base, a sidewall portion connected to the base, and a plate-like projection that is used in forming the incision and is mounted on a main surface of the base such that the plate-like projection is substantially perpendicular to the main surface of the base, a height of the plate-like projection being substantially equal to the depth of the incision,
filling the tofu shaping tool with raw ingredients for producing the tofu;
coagulating the raw ingredients; and
removing the tofu shaping tool after the coagulation.

**8.** A method for shaping the tofu of claim 1 or 2,
**characterized in that** the method comprises:
preparing a tofu shaping tool including a base and a plate-like projection that is used in forming the incision and is mounted on a main surface of the base such that the plate-like projection is substantially perpendicular to the main surface of the base, a height of the plate-like projection being substantially equal to the depth of the incision; and
pressing the tofu shaping tool onto a front surface of the tofu.

**9.** A method for shaping the tofu of claim 1 or 2,
**characterized in that** the method comprises:
preparing a tofu shaping tool including a base, a sidewall portion connected to the base, and a plate-like projection that is used in forming the incision and is mounted on a main surface of the base such that the plate-like projection is substantially perpendicular to the main surface of the base, a height of the plate-like projection being substantially equal to the depth of the incision; and
pressing the tofu shaping tool onto a front surface of the tofu.

Statement under Art. 19.1 PCT
The Applicant, who received the International Search Report transmitted on July 5, 2015 relating to the above identified International Application, herby files amendment under Article 19(1) as in the attached sheets.

As for the claim amendments, please note that the Applicant amends Claims 3, 7-9.

Claim 3 after amendment corresponds to the original claim 3 with the addition of limitations based on paragraph 0042 and 0045 of the description in the application as filed internationally.

Claim 7 after amendment corresponds to the original claim 7 with the addition of limitations based on paragraph 0042 and 0045 of the description in the application as filed internationally.

Claim 8 after amendment corresponds to the original claim 8 with the addition of limitations based on paragraph 0042 and 0045 of the description in the application as filed internationally.

Claim 9 after amendment corresponds to the original claim 9 with the addition of limitations based on paragraph 0042 and 0045 of the description in the application as filed internationally.
